# EUROPÄISCHE PATENTSCHRIFT

(11) **EP 2 707 644 B1**
(45) Veröffentlichungstag und Bekanntmachung des Hinweises auf die Patenterteilung: **08.04.2015**
(21) Anmeldenummer: 12723416.9
(22) Anmeldetag: 11.05.2012
(51) Int. Cl.: F16T 1/38, F16T 1/34, F16T 1/00

(54) **KONDENSATABLEITER FÜR DRUCKGASSYSTEM**
CONDENSATE DRAIN FOR PRESSURIZED GAS SYSTEM
PURGEUR DE CONDENSAT POUR SYSTÈME DE GAZ COMPRIMÉ

(30) Priorität: 11.05.2011 DE 102011101227
(43) Veröffentlichungstag der Anmeldung: 19.03.2014
(73) Patentinhaber: Beko Technologies GmbH, 41468 Neuss (DE)
(72) Erfinder: SCHLENSKER, Herbert, 51381 Leverkusen (DE)
(74) Vertreter: Patentanwälte Bauer Vorberg Kayser
(86) Internationale Anmeldenummer: PCT/EP2012/058776
(87) Internationale Veröffentlichungsnummer: WO 2012/152921

(56) Entgegenhaltungen:
- DE-B3-102005 048 646
- GB-A- 2 231 407
- US-A- 956 030
- US-A- 3 905 385

## Beschreibung

Die vorliegende Erfindung betrifft einen Kondensatableiter für Druckgassysteme, insbesondere Druckluftsysteme, nach dem Oberbegriff des Anspruchs 1.

Derartige Kondensatableiter werden beispielsweise in der Drucklufttechnik verwendet, um das üblicherweise in dem Druckleitungsnetz entstehende Kondensat, das neben Wasser auch Öl oder Rost enthalten kann, aus diesem zu entfernen. Die Kondensate entstehen aus der Feuchtigkeit der Umgebungsluft, die ein Druckluftkompressor zur Erzeugung der Druckluft ansaugt. Das Öl entstammt im Wesentlichen den Kompressoren, in denen es als Schmiermittel verwendet wird, der Rost hingegen in der Regel aus den Druckluftleitungen.

Es sind unterschiedliche Bauformen von Kondensatableitern bekannt. Allgemein arbeiten diese derart, dass ein Ventil geöffnet wird, wodurch das Kondensat aus dem Druckluftnetz durch den Druck ausgetrieben wird. Bei diesem Vorgang ist der Gas- bzw. Druckluftverlust aus Gründen der Wirtschaftlichkeit beim Betrieb des Druckgassystems möglichst gering zu halten.

Bekannte Kondensatableiter lassen sich nach der Art der Ventilansteuerung und der Energieversorgung im Wesentlichen in drei Gruppen einteilen:
So genannte Schwimmerableiter arbeiten mit einem Hohlkörper, der durch die Auftriebskraft der sich in einer Sammelkammer ansammelnden Flüssigkeit (Kondensat) angehoben wird und damit ein Ventil betätigt. Dieses Ventil öffnet meist indirekt mittels einer Servosteuerung eine Ablassöffnung der Sammelkammer, durch die das Kondensat herausgedrückt wird. Die als Schwimmerableiter ausgeführten Kondensatableiter sind aufgrund ihrer kostengünstigen Herstellbarkeit sehr weit verbreitet, jedoch auch störungsanfällig.

Des Weiteren sind Kondensatableiter mit zeitgesteuerten Magnetventilen, die elektrisch betätigte Ventile sind, bekannt. Diese Kondensatableiter öffnen die Ventile in einstellbaren Zeitintervallen. Nachteilig ist das Öffnen bei fehlendem Kondensat, wodurch hohe Energieverluste durch abgelassene Druckluft verursacht werden.

Schließlich erfassen Kondensatableiter mit elektronisch niveaugeregelten Ventilen, im Folgenden auch als elektronisch niveaugeregelte Kondensatableiter oder kurz als elektronische Kondensatableiter bezeichnet, eine sich ansammelnde Flüssigkeits- bzw. Kondensatmenge über einen elektronischen Füllstandssensor. Wenn eine bestimmte Menge erreicht ist, wird das Ventil geöffnet und genau diese Menge ohne zusätzliche Druckluftverluste abgeleitet. Diese Art von Kondensatableitern sind in der Herstellung zwar relativ teuer, zeichnen sich jedoch andererseits durch einen sehr kostengünstigen Betrieb aus, weshalb sich mit den elektronisch niveaugeregelten Kondensatableitern über deren gesamte Betriebslebensdauer wesentliche Kostenvorteile erzielen lassen. Die elektronisch niveaugeregelten Kondensatableiter haben sich mittlerweile als günstigste Lösung zur Ableitung von Kondensat aus Druckgassystemen etabliert. Einen solchen Kondensatableiter zeigt die US 3 905 385.

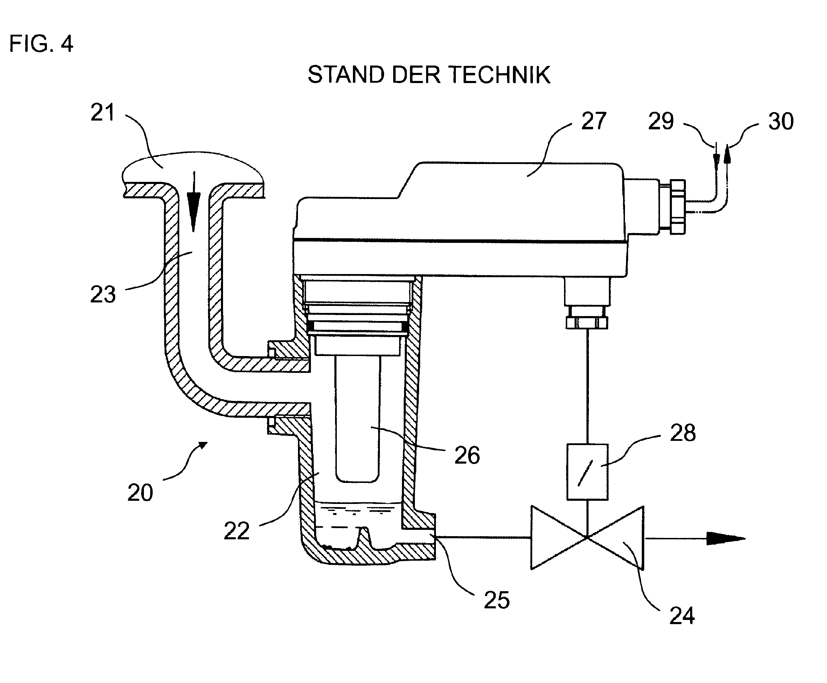

In Fig. 4 der dieser Beschreibung beigefügten Zeichnung ist ein elektronisch niveaugeregelter Kondensatableiter 20 für ein Druckgassystem 21, insbesondere ein Druckluftsystem, nach dem Stand der Technik dargestellt. Der Kondensatableiter 20 weist eine Kondensatsammelkammer 22 auf, die über einen Kondensatzulauf 23 an das Druckgassystem 21, anschließbar ist. Somit wird dem Druckgassystem 21, beispielsweise an einem tiefsten Punkt einer Rohrleitung, Kondensat entnommen, das sich dann in der Kondensatsammelkammer 22 des Kondensatableiters 20, insbesondere am Boden der Kondensatsammelkammer 22, sammelt. Die Kondensatsammelkammer 22 weist ferner einen mittels eines elektrisch betätigbaren Ventils 24 verschließbaren Kondensatablauf 25 auf. Mittels wenigstens eines elektronischen Füllstandsmessers 26, beispielsweise einem kapazitiven Füllstandssensor, der bei dem in Fig. 4 dargestellten Kondensatableiter 20 in die Kondensatsammelkammer 22 hineinragt, wird der Kondensatfüllstand in der Kondensatsammelkammer 22 erfasst. Eine elektronische Steuereinheit 27 wertet den mittels des Füllstandsmessers 26 erfassten Kondensatfüllstand in der Kondensatsammelkammer 22 aus und sobald eine bestimmte Kondensatmenge in der Kondensatsammelkammer 22 erreicht ist, öffnet die Steuereinheit 27 das Ventil 24, um diese Kondensatmenge aus der Kondensatsammelkammer 22 abzuleiten. Nach dem Ableiten des Kondensats aus der Kondensatsammelkammer 22 schließt die Steuereinheit 27 das Ventil 24 wieder, um unnötigen Druckluftverlust aus dem Druckgassystem 21 zu vermeiden. Bei dem in Fig. 4 dargestellten Kondensatableiter 20 wird das Ventil 24 über einen elektrisch betätigbaren Magneten bzw. Elektromagneten 28 geöffnet und geschlossen. Es ist demnach ein elektrisch betätigbares Magnetventil.

Für den Betrieb elektronisch niveaugeregelter Kondensatableiter ist aufgrund ihrer Funktionsweise elektrische Energie erforderlich. In Fig. 4 ist dies mittels einer zu dem Kondensatableiter 20 führenden elektrischen Energieversorgungsleitung 29 dargestellt. Dies kann jedoch je nach Installationsort ein Nachteil sein, zum Beispiel bei sehr großen Distanzen zwischen dem Drucklufterzeugungsort, der meist über eine elektrische Energieversorgung verfügt, und der Druckluftverbrauchsstelle. In einem solchen Fall ist eine aufwändige Verlegung elektrischer Leitungen zum Kondensatableiter erforderlich. Auch bei einem Betrieb des elektrischen Kondensatableiters in einer explosionsgefährdeten Atmosphäre werden aufgrund der möglichen Entstehung elektrischer Zündfunken die elektrische Versorgung des Kondensatableiters und dessen Ausrüstung aufgrund zu berücksichtigender Explosionsschutzmaßnahmen recht aufwändig.

Bei elektronischen Kondensatableitern nach dem Stand der Technik, wie dem in Fig. 4 dargestellten Kondensatableiter 20, ist ferner eine Funktionsüberwachung üblich. Dabei wird zum Beispiel eine Alarmmeldung über eine von dem Kondensatableiter 20 wegführende elektrische Übertragungsleitung 30 ausgelöst, wenn das Niveau des in der Kondensatsammelkammer 22 angesammelten Kondensats trotz erfolgtem Kondensatablassvorgang erhalten bleibt. Insbesondere wird eine Alarm- bzw. Störmeldung üblicherweise potenzialfrei mittels der Leitung 30 von dem Kondensatableiter 20 zu einer Betriebswarte übertragen. Störmeldungen am Kondensatableiter können ferner auch über optische oder akustische Signalisierungseinrichtungen, zum Beispiel Warnleuchten oder Warnsirenen, angezeigt werden. Auch in diesem Fall ist je nach Installationsort, zum Beispiel bei großer Entfernung zwischen dem Kondensatableiter und der Betriebswarte, eine aufwändige Leitungsführung notwendig bzw. sind die akustischen oder optischen Warnmelder wenig effektiv.

Vor diesem Hintergrund hat sich die vorliegende Erfindung die Aufgabe gestellt, einen Kondensatableiter für Druckgassysteme, insbesondere Druckluftsysteme, zu schaffen, der die zuvor beschriebenen Nachteile vorbekannter Kondensatableiter überwindet. Insbesondere soll der Installationsaufwand für den Kondensatableiter an Installationsorten gering sein, die über keine elektrische Energieversorgung verfügen. Ferner soll der Kondensatableiter auch für den Einsatz in explosionsgefährdeter Atmosphäre geeignet oder zumindest kostengünstig, das heißt ohne großen baulichen Aufwand, bereitstellbar sein.

Diese Aufgabe wird durch einen Kondensatableiter für Druckgassysteme, insbesondere Druckluftsysteme, mit den Merkmalen des Anspruchs 1 gelöst. Weitere, besonders vorteilhafte Ausgestaltungen der Erfindung offenbaren die Unteransprüche.

Erfindungsgemäß weist ein Kondensatableiter für Druckgassysteme, insbesondere Druckluftsysteme, eine über einen Kondensatzulauf an das Druckgassystem anschließbare Kondensatsammelkammer mit einem mittels eines elektrisch betätigbaren Ventils verschließbaren Kondensatablauf auf. Ferner weist der erfindungsgemäße Kondensatableiter wenigstens einen elektronischen Füllstandsmesser auf, beispielsweise einen kapazitiven Füllstandssensor, mit dem der Kondensatfüllstand in der Kondensatsammelkammer erfassbar ist, sowie eine elektronische Steuereinheit, mit welcher der mittels des Füllstandsmessers erfasste Kondensatfüllstand auswertbar und das Ventil betätigbar ist. Erfindungsgemäß ist weiterhin wenigstens eine Batterie vorgesehen, welche die Stromversorgung für wenigstens die Steuereinheit, den Füllstandsmesser und das Ventil bereitstellt. Die Batterie kann hierbei sowohl in dem Kondensatableiter integriert sein und mit diesem eine bauliche Einheit bilden oder als von dem Kondensatableiter getrennte, eigenständige Einheit ausgebildet sein, die mit dem Kondensatableiter in diesem Fall über entsprechende elektrische Leitungen verbindbar ist. Die Batterie weist zweckmäßigerweise eine Kapazität auf, die ausreicht, den Betrieb des Kondensatableiters wenigstens über einen gewissen Zeitraum sicherzustellen.

Mit anderen Worten stellt die Batterie demnach die elektrische Versorgung aller elektrischen Komponenten des erfindungsgemäßen Kondensatableiters bereit. Somit ist der Kondensatableiter unabhängig von einer am Installationsort vorhandenen elektrischen Energieversorgung autark betreibbar. Folglich verringert sich der Installationsaufwand für den erfindungsgemäßen Kondensatableiter wesentlich, da auf eine aufwändige elektrische Leitungsverlegung zum Installationsort des Kondensatableiters vollständig verzichtet werden kann. Außerdem vereinfacht der Batteriebetrieb des Kondensatableiters die für einen Einsatz in einer explosionsgefährdeten Atmosphäre baulich am Kondensatableiter zu berücksichtigenden Explosionsschutzmaßnahmen.

Bevorzugt ist das elektrisch betätigbare Ventil ein mittels eines Elektromagneten betätigbares Ventil, zum Beispiel ein elektrisch betätigbares Magnetventil. Insbesondere ist es ein wie in der Beschreibungseinleitung beschriebenes, elektronisch niveaugeregeltes Ventil bzw. Magnetventil.

Gemäß der Erfindung ist die Batterie eine wiederaufladbare Batterie. Ferner ist wenigstens ein Stromerzeuger vorgesehen, mit dem elektrische Energie aus einer Fluidströmung erzeugbar ist und der stromab des Ventils fluidleitend mit diesem verbunden und stellt die erzeugte elektrische Energie der Batterie zur Verfügung, um diese zu laden. Als Fluidströmung ist bei dieser Ausgestaltung insbesondere das durch das Ventil aus der Kondensatsammelkammer abgeleitete und durch das Druckgas unter Druck stehende Kondensat zu verstehen. Es ist jedoch ebenso möglich, dass nach dem Ablassen des Kondensats aus der Kondensatsammelkammer zusätzlich auch Druckgas, insbesondere Druckluft, über das Ventil aus dem Kondensatableiter abgelassen wird, das den Stromerzeuger für die Energieerzeugung antreibt. Insofern ist unter der Fluidströmung im Sinne der vorliegenden Erfindung sowohl der bei einem Ableitvorgang durch das Kondensat gebildete Flüssigkeitsstrom als auch der durch das Druckgas gebildete Druckgasstrom zu verstehen. Der elektrisch autarke Betrieb des erfindungsgemäßen Kondensatableiters wird durch die wiederaufladbare Batterie sowie den Stromerzeuger zur Umwandlung der ohnehin am Installationsort des Kondensatableiters verfügbaren pneumatischen Energie des Druckgassystems in elektrische Energie erheblich verbessert. Darüber hinaus werden bis auf den Stromerzeuger keine zusätzlichen Komponenten zur Ausbildung des erfindungsgemäßen Kondensatableiters benötigt, da die vorhandenen Komponenten des Kondensatableiters optimal genutzt werden.

Zum Beispiel kann die Batterie bei jedem normal stattfindenden Ableitvorgang des Kondensats aus der Kondensatsammelkammer automatisch geladen werden. Alternativ oder zusätzlich hierzu kann die elektronische Steuereinheit auch ausgelegt sein, den Batterieladezustand zu überwachen und nach Erkennen eines kritischen Ladezustands einen oder mehrere Kondensatableitvorgänge einzuleiten, um den Ladezustand der Batterie auf ein gewünschtes Niveau zu erhöhen. Sollte sich kein Kondensat in der Kondensatsammelkammer befinden, wird das aus dem Kondensatablauf ausströmende Druckgas für die Energieumwandlung durch den Stromerzeuger genutzt.

Gemäß einer weiteren vorteilhaften Ausgestaltung der Erfindung ist zusätzlich am Kondensatableiter ein Druckgasauslass zum Ablassen von Druckgas aus dem Druckgassystem vorgesehen, der über ein zweites elektrisch betätigbares Ventil verschließbar ist. Bevorzugt ist auch dieses zweite Ventil, das ebenfalls von der Batterie mit elektrischer Energie versorgt wird, ein mittels eines Elektromagneten betätigbares Magnetventil. Ferner ist wenigstens ein Stromerzeuger vorgesehen, mit dem elektrische Energie aus einer Fluidströmung erzeugbar ist und der stromab des zweiten elektrisch betätigbaren Ventils fluidleitend mit diesem verbunden ist. Dieser stellt die erzeugte elektrische Energie der Batterie zur Verfügung, um diese zu laden. Als Fluidströmung ist bei dieser Ausgestaltung insbesondere das über den Druckgasauslass aus dem Druckgassystem entnehmbare Druckgas, zum Beispiel Druckluft, zu verstehen. Auch diese Ausgestaltung verbessert den elektrisch autarken Betrieb des erfindungsgemäßen Kondensatableiters durch Verwendung der ohnehin am Installationsort des Kondensatableiters verfügbaren pneumatischen Energie des Druckgassystems und deren Umwandlung mit Hilfe des Stromerzeugers in elektrische Energie zum Laden der Batterie wesentlich. Eine ähnliche Unwandlung pneumatischer Energie zeigt das Dokument DE 10 2005 048 646 B3.

Vorteilhafterweise ist die elektronische Steuereinheit des Kondensatableiters ausgelegt, den Batterieladezustand zu überwachen und darüber hinaus auch das zweite Ventil zu betätigen. Sobald ein kritischer Ladezustand erkannt wird, öffnet die Steuereinheit das zweite Ventil, um dem Stromerzeuger Druckgas aus dem Druckgassystem zuzuführen und somit den Ladezustand der Batterie auf ein gewünschtes Niveau zu erhöhen. Sobald der gewünschte Ladezustand der Batterie erreicht ist, schließt die Steuereinrichtung das Ventil wieder.

Eine weitere vorteilhafte Ausgestaltung der Erfindung sieht vor, dass der Druckgasauslass an der Kondensatsammelkammer oberhalb eines maximalen Kondensatfüllstands angeordnet ist. Besonders bevorzugt ist der Druckgasauslass in einer stets kondensatfreien Schutzzone im oberen Bereich der Kondensatsammelkammer angeordnet. Somit steht im Wesentlichen kondensatfreies, das heißt sauberes, Druckgas bzw. Druckluft zum Betreiben des Stromerzeugers zur Verfügung.

Weitere vorteilhafte Ausgestaltungen der Erfindungen sehen vor, dass der Stromerzeuger ein nach dem piezoelektrischen Prinzip arbeitender Stromerzeuger mit einem Piezokristall ist, der durch von der Fluidströmung, das heißt vom Kondensat und/oder Druckgas, bewirkte Druckwechselbelastungen aktivierbar ist, oder ein nach dem Dynamoprinzip arbeitender Stromerzeuger mit einem Turbinenrad ist, das durch die Fluidströmung, das heißt durch die Kondensatströmung oder Druckgasströmung, antreibbar ist.

Gemäß einer weiteren vorteilhaften Ausgestaltung der Erfindung ist ein Funkmodul vorgesehen, mit dem Alarmmeldungen und/oder der Betriebszustand des Kondensatableiters an eine Betriebswarte und/oder ein Telefon eines Wartungsmitarbeiters übertragbar sind. Auch das Funkmodul kann hierbei in baulicher Einheit mit dem Kondensatableiter verbunden sein oder als separate Einheit über entsprechende elektrische Leitungen mit dem Kondensatableiter verbunden sein. In jedem Fall wird die elektrische Energieversorgung durch die Batterie des Kondensatableiters bereitgestellt. Das Funkmodul gewährleistet eine sichere Übertragung von Alarmmeldungen und/oder dem Betriebszustand des Kondensatableiters, ohne hierfür elektrische Übertragungsleitungen aufwändig verlegen zu müssen.

Weitere vorteilhafte Einzelheiten und Wirkungen der Erfindung sind im Folgenden anhand zweier in den Figuren dargestellter Ausführungsbeispiele näher erläutert. Es zeigen:
- Fig. 1: eine schematische Darstellung eines Druckgassystems mit einem angeschlossenen Kondensatableiter gemäß der Erfindung,
- Fig. 2: eine seitliche Teilschnittansicht eines ersten Ausführungsbeispiels eines erfindungsgemäßen Kondensatableiters,
- Fig. 3: eine seitliche Teilschnittansicht eines zweiten Ausführungsbeispiels eines erfindungsgemäßen Kondensatableiters und
- Fig. 4: eine seitliche Teilschnittansicht eines Kondensatableiter nach dem Stand der Technik.

In den unterschiedlichen Figuren sind gleiche Teile stets mit denselben Bezugszeichen versehen, so dass diese in der Regel auch nur einmal beschrieben werden.

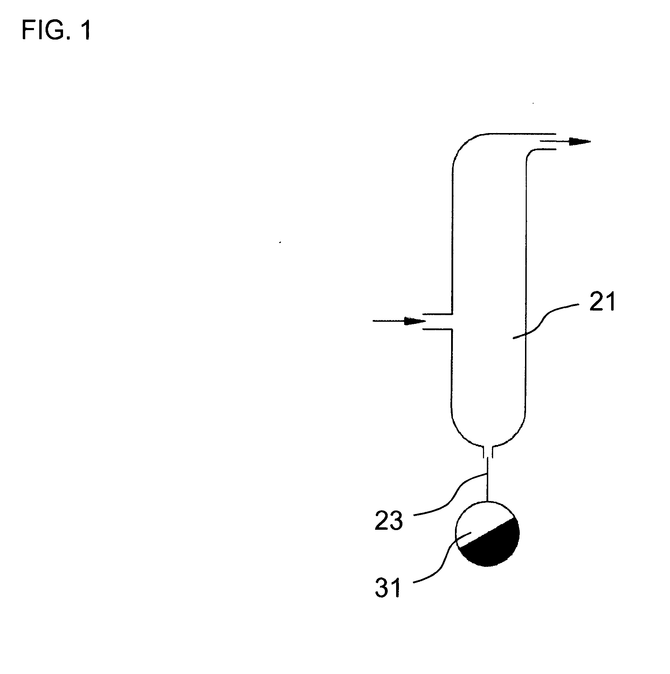

Figur 1 zeigt eine schematische Darstellung eines Druckgassystems 21, insbesondere Druckluftsystems, mit einem Kondensatableiter 31 gemäß der Erfindung, insbesondere einem elektronisch niveaugeregelten Kondensatableiter. Wie der Fig. 1 zu entnehmen ist, ist der Kondensatableiter 31 bevorzugt an einer tiefen Stelle beispielsweise einer Rohrleitung über den Kondensatzulauf 23 an das Druckgassystem angeschlossen.

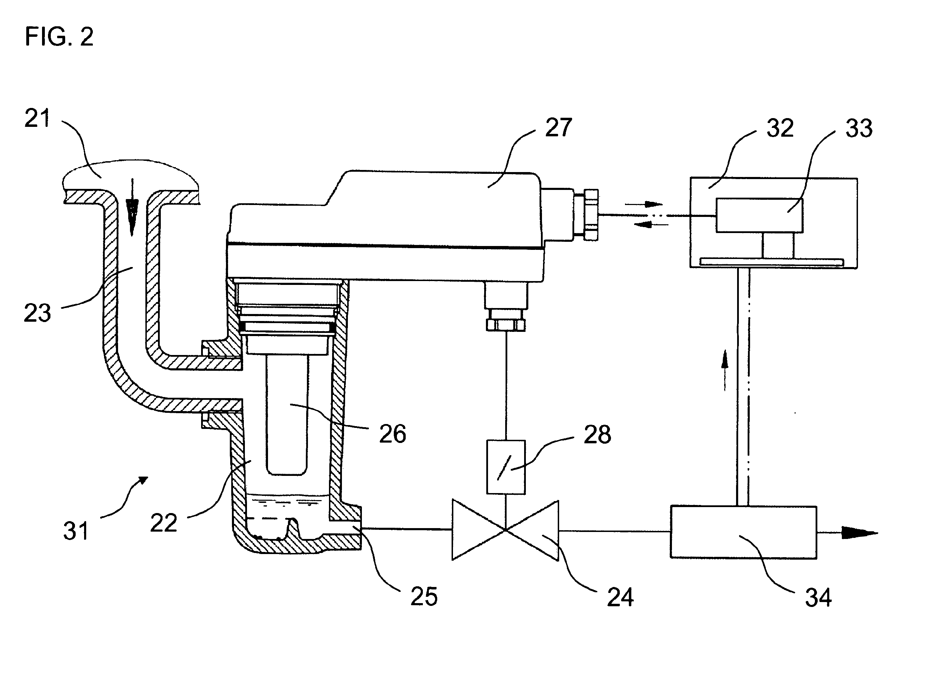

Der erfindungsgemäße Kondensatableiter 31 ist in Fig. 2 in einer ersten Ausführungsform in einer seitlichen Teilschnittansicht detaillierter dargestellt. Auf eine erneute Beschreibung aller bereits im Zusammenhang mit dem Kondensatableiter 20 gemäß dem Stand der Technik beschriebenen, funktionsgleichen Komponenten des erfindungsgemäßen Kondensatableiters 31 wird an dieser Stelle verzichtet. Es handelt sich hierbei im Wesentlichen um die mit den Bezugszeichen 21 bis 27 gekennzeichneten Elemente.

Der in Fig. 2 dargestellte erfindungsgemäße Kondensatableiter 31 weist zudem wenigstens eine in einer von dem Kondensatableiter 31 baulich getrennten Batterieeinheit 32 aufgenommene Batterie 33 auf. Die Batterieeinheit 32 bzw. die Batterie 33 ist über eine elektrische Verbindungsleitung mit der elektronischen Steuereinheit 27 des Kondensatableiters 31 verbunden. Die Batterieeinheit 32 bzw. die Batterie 33 stellt die Versorgung aller elektrischen Komponenten des Kondensatableiters 31 bereit, das heißt im Wesentlichen des Füllstandsmessers 26, der elektronischen Steuereinheit 27 und des Ventils 24 bzw. des Elektromagneten 28 zur Steuerung des Ventils 24.

Wie Fig. 2 ferner zu entnehmen ist, ist stromab des Ventils 24 ein Stromerzeuger 34 fluidleitend mit der Auslassseite des Ventils 24 verbunden. Der Stromerzeuger 34 ist bevorzugt ein nach dem piezoelektrischen Prinzip arbeitender Stromerzeuger mit einem Piezokristall, der durch von der Fluidströmung, das heißt vom Kondensat und/oder Druckgas, bewirkte Druckwechselbelastungen aktivierbar ist, oder ein nach dem Dynamoprinzip arbeitender Stromerzeuger mit einem Turbinenrad, das durch die Fluidströmung, das heißt durch die Kondensatströmung oder Druckgasströmung, antreibbar ist. Die vom Stromerzeuger 34 erzeugte Energie wird der Batterieeinheit 32 bzw. der Batterie 33 über eine entsprechende elektrische Verbindungsleitung zwischen dem Stromerzeuger 34 und der Batterieeinheit 32 zum Laden der Batterie 33 zur Verfügung gestellt.

Bei dem in Fig. 2 dargestellten Ausführungsbeispiel des erfindungsgemäßen Kondensatableiters 31 kann die Batterie 33 somit bei jedem Ableitvorgang des Kondensats aus der Kondensatsammelkammer 22 automatisch geladen werden. Alternativ oder zusätzlich hierzu ist es vorteilhaft, wenn zum Beispiel die elektronische Steuereinheit 27 den Ladezustand der Batterieeinheit 32 bzw. der Batterie 33 überwacht und nach Erkennen eines kritischen Ladezustands einen oder mehrere Kondensatableitvorgänge über das Ventil 24 durchführt, um den Ladezustand der Batterieeinheit 32 bzw. der Batterie 33 auf ein gewünschtes Niveau zu erhöhen. Da der Stromerzeuger 34 ausgelegt ist, eine Fluidströmung in elektrische Energie umzuwandeln, kann in dem Fall, dass kein Kondensat mehr in der Kondensatsammelkammer 22 zur Verfügung steht, aus dem Kondensatablauf 25 ausströmendes Druckgas bzw. Druckluft zur Energieumwandlung durch den Stromerzeuger 34 genutzt werden.

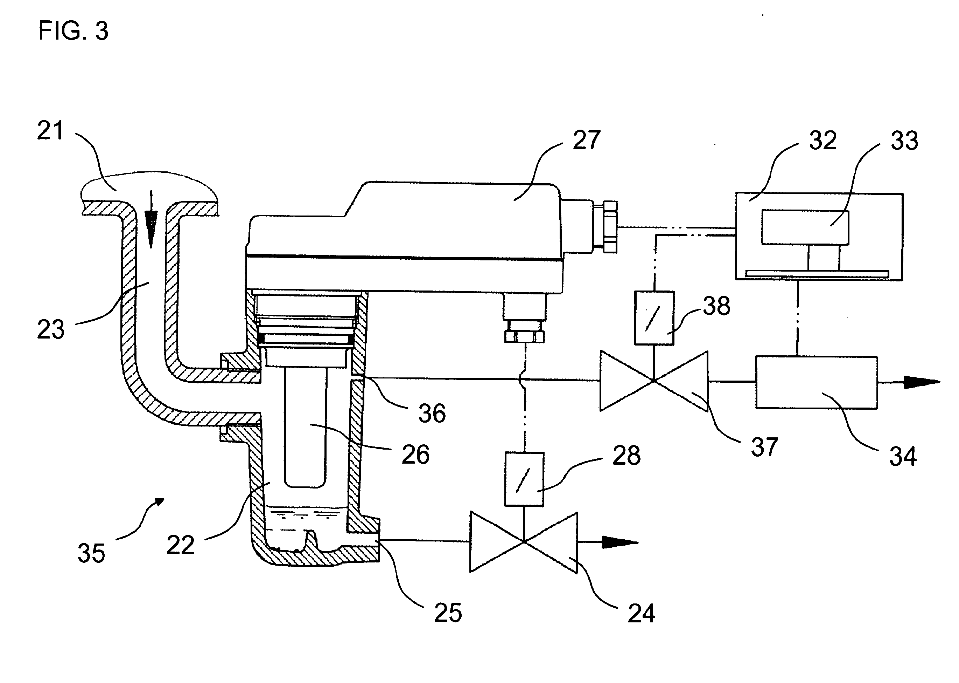

In Fig. 3 ist eine seitliche Teilschnittansicht eines zweiten Ausführungsbeispiels eines erfindungsgemäßen Kondensatableiters 35, insbesondere eines elektronisch niveaugeregelten Kondensatableiters dargestellt. Der Kondensatableiter 35 unterscheidet sich von dem in Fig. 2 dargestellten Kondensatableiter 31 im Wesentlichen dadurch, dass der Stromerzeuger 34 über einen an der Kondensatsammelkammer 22 vorgesehenen Druckgasauslass 36 mit Druckgas aus der Kondensatsammelkammer 22 versorgt werden kann. Hierzu umfasst der Kondensatableiter 35 ein zweites, ebenfalls elektrisch betätigbares Ventil 37, mit dem der Druckgasauslass 36 verschließbar ist. Bei der in Fig. 3 dargestellten Ausführungsform ist auch dieses zweite Ventil 37 ein mittels eines Elektromagneten 38 betätigbares Magnetventil. Das Ventil 37 bzw. der Elektromagnet 38 wird entsprechend von der Batterieeinheit 32 bzw. der Batterie 33 mit elektrischer Energie versorgt.

Bei der in Fig. 3 dargestellten Ausführungsform des erfindungsgemäßen Kondensatableiters 35 ist ferner eine in Fig. 3 nicht näher gezeigte elektronische Steuereinheit in der Batterieeinheit 32 vorgesehen. Diese überwacht den Ladezustand der Batterie 33 und steuert das Ventil 37 über den Elektromagneten 38, der zu diesem Zweck mittels einer elektrischen Verbindungsleitung mit der Batterieeinheit 32 wie in Fig. 3 dargestellt verbunden ist. Diese Steuerungsaufgabe könnte jedoch ebenso durch eine entsprechende Auslegung der elektronischen Steuereinheit 27 übernommen werden. Die in Fig. 3 gezeigte Ausführungsvariante hat jedoch den Vorteil, dass auch ein im Wesentlichen herkömmlicher Kondensatableiter nachträglich ohne großen Aufwand mit der Batterieeinheit 32 bzw. Batterie 33, dem Stromerzeuger 34 und dem mittels des Elektromagneten 38 elektrisch betätigbaren Ventil 37 nachgerüstet werden kann. Sofern nicht bereits vorhanden, ist lediglich zum Beispiel an der Kondensatsammelkammer 22 der Druckgasauslass 36 vorzusehen, der mit einem Eingangsanschluss des Ventils 37 fluidleitend zu verbinden ist. Sobald die Steuereinheit der Batterieeinheit 32 einen kritischen Ladezustand der Batterie 33 erkennt, öffnet sie das Ventil 37, um dem Stromerzeuger 34 Druckgas bzw. Druckluft aus dem Druckgassystem zuzuführen und somit den Ladezustand der Batterie 33 auf ein gewünschtes Niveau zu erhöhen. Sobald der gewünschte Ladezustand der Batterie 33 erreicht ist, schließt die Steuereinrichtung das Ventil 37 wieder.

Beide in den Fig. 2 und 3 dargestellten Kondensatableiter 31 und 35 können zum Zweck einer Funktionsüberwachung jeweils ferner mit einem Funkmodul ausgestattet sein, mit dem Alarmmeldungen und/oder der Betriebszustand des jeweiligen Kondensatableiters 31 bzw. 35 an eine Betriebswarte und/oder ein Telefon eines Wartungsmitarbeiters übertragbar sind. Das Funkmodul kann hierbei in baulicher Einheit mit dem Kondensatableiter 31 bzw. 35 oder der Batterieeinheit 32 verbunden sein oder als separate Einheit über entsprechende elektrische Leitungen mit dem Kondensatableiter 31 bzw. 35 ähnlich der Batterieeinheit 32 verbunden sein. In jedem Fall wird die elektrische Energieversorgung des Funkmoduls durch die Batterieeinheit 32 bzw. die Batterie 33 bereitgestellt.

Der erfindungsgemäße Kondensatableiter wurde anhand zweier in den Figuren dargestellter Ausführungsbeispiele näher erläutert. Der Kondensatableiter ist jedoch nicht auf die hierin beschriebenen Ausführungsformen beschränkt, sondern umfasst im Rahmen des Gegenstandes des unabhängigen Anspruchs auch gleich wirkende weitere Ausführungsformen.

In bevorzugter Ausführung wird der erfindungsgemäße, batteriebetriebene Kondensatableiter zum Ableiten von Kondensat aus Druckgassystemen, insbesondere Druckluftsystemen, verwendet.

### Bezugszeichenliste:

- 20: Kondensatableiter nach Stand der Technik
- 21: Druckgassystem
- 22: Kondensatsammelkammer
- 23: Kondensatzulauf
- 24: Ventil
- 25: Kondensatablauf
- 26: Füllstandsmesser
- 27: Steuereinheit
- 28: Elektromagnet
- 29: Elektrische Energieversorgungsleitung
- 30: Elektrische Übertragungsleitung
- 31: Kondensatableiter
- 32: Batterieeinheit
- 33: Batterie
- 34: Stromerzeuger
- 35: Kondensatableiter
- 36: Druckgasauslass
- 37: Ventil
- 38: Elektromagnet

## Patentansprüche

1. Kondensatableiter für Druckgassysteme, aufweisend eine über einen Kondensatzulauf (23) an das Druckgassystem anschließbare Kondensatsammelkammer (22) mit einem mittels eines elektrisch betätigbaren Ventils (24) verschließbaren Kondensatablauf (25), wenigstens einen elektronischen Füllstandsmesser (26), mit dem der Kondensatfüllstand in der Kondensatsammelkammer (22) erfassbar ist, eine elektronische Steuereinheit (27), mit welcher der mittels des Füllstandsmessers (26) erfasste Kondensatfüllstand auswertbar und das Ventil (24) betätigbar ist,
und wenigstens eine Batterie (33), welche die Stromversorgung für wenigstens die Steuereinheit (27), den Füllstandsmesser (26) und das Ventil (24) bereitstellt,
**dadurch gekennzeichnet, dass**
die Batterie (33) eine wiederaufladbare Batterie ist und wenigstens ein Stromerzeuger (34) vorgesehen ist, mit dem elektrische Energie aus einer Fluidströmung erzeugbar ist und der stromab des Ventils (24) zum Verschließen des Kondensatablaufs (25) fluidleitend mit dem Ventil (24) verbunden ist und die erzeugte elektrische Energie der Batterie (33) bereitstellt, um diese zu laden.

2. Kondensatableiter nach Anspruch 1,
**dadurch gekennzeichnet, dass**
die Batterie (33) eine wiederaufladbare Batterie ist und ein Druckgasauslass (36) am Kondensatableiter zum Ablassen von Druckgas aus dem Druckgassystem vorgesehen ist und wenigstens ein Stromerzeuger (34) vorgesehen ist, mit dem elektrische Energie aus einer Fluidströmung erzeugbar ist und der stromab eines zweiten elektrisch betätigbaren Ventils (37), mit dem der Druckgasauslass (36) verschließbar ist, fluidleitend mit dem zweiten Ventil (37) verbunden ist und die erzeugte elektrische Energie der Batterie (33) bereitstellt, um diese zu laden.

3. Kondensatableiter nach Anspruch 2,
**dadurch gekennzeichnet, dass**
der Druckgasauslass (36) an der Kondensatsammelkammer (22) oberhalb eines maximalen Kondensatfüllstands angeordnet ist.

4. Kondensatableiter nach einem der vorhergehenden Ansprüche,
**dadurch gekennzeichnet, dass**
der Stromerzeuger (34) ein nach dem piezoelektrischen Prinzip arbeitender Stromerzeuger mit einem Piezokristall ist, der durch von der Fluidströmung bewirkte Druckwechselbelastungen aktivierbar ist, oder ein nach dem Dynamoprinzip arbeitender Stromerzeuger mit einem Turbinenrad ist, das durch die Fluidströmung antreibbar ist.

5. Kondensatableiter nach einem der vorhergehenden Ansprüche,
**gekennzeichnet durch**
ein Funkmodul, mit dem Alarmmeldungen und/oder der Betriebszustand des Kondensatableiters an eine Betriebswarte und/oder ein Telefon eines Wartungsmitarbeiters übertragbar sind.

## Claims

1. A condensate drain for pressurized gas systems, comprising: a condensate collecting chamber (22), which can be connected to the pressurized gas system via a condensate inlet (23) and has a condensate outlet (25) that can be closed by means of an electrically operable valve (24), at least one electronic filling level gauge (26) with which the condensate filling level in the condensate collecting chamber (22) can be detected, an electronic control unit (27) with which the condensate filling level detected by means of the filling level gauge (26) can be evaluated and the valve (24) can be operated,
and at least one battery (33), which provides the power supply for at least the control unit (27), the filling level gauge (26) and the valve (24),
**characterised in that**
the battery (33) is a rechargeable battery and at least one power generator (34) is provided with which electrical energy can be generated from a flow of fluid and which is connected in a fluid-conducting manner to the valve (24) downstream of the valve (24) for closing the condensate outlet (25) and provides the generated electrical energy to the battery (33) in order to charge the latter.

2. The condensate drain according to claim 1,
**characterised in that**
the battery (33) is a rechargeable battery, and a pressurized gas outlet (36) is provided on the condensate drain for discharging pressurized gas from the pressurized gas system, and at least one power generator (34) is provided with which electrical energy can be generated from a flow of fluid and which is connected in a fluid-conducting manner to a second valve (37) downstream of said second electrically operable valve (37) with which the pressurized gas outlet (36) can be closed, and which provides the generated electrical energy to the battery (33) in order to charge the latter.

3. The condensate drain according to claim 2,
**characterised in that**
the pressurized gas outlet (36) is disposed on the condensate collecting chamber (22) above a maximum condensate filling level.

4. The condensate drain according to any one of the preceding claims,
**characterised in that**
the power generator (34) is a power generator operating in accordance with the piezoelectric principle and having a piezo crystal that can be activated by alternating pressure loads caused by the flow of fluid, or is a power generator functioning in accordance with the dynamo principle and having a turbine wheel that can be driven by the flow of fluid.

5. The condensate drain according to any one of the preceding claims,
**characterised by**
a radio module with which alarm signals and/or the operating state of the condensate drain can be transmitted to an operation control centre and/or a telephone of a maintenance worker.

## Revendications

1. Purgeur de condensat pour systèmes à gaz comprimé, comprenant une chambre collectrice de condensat (22) apte à être raccordée au système à gaz comprimé via une conduite d'amenée de condensat (23) et ayant une conduite d'écoulement de condensat (25) apte à être obturée au moyen d'une vanne (24) manoeuvrable électriquement, au moins un dispositif de mesure de niveau de remplissage (26) électronique par le biais duquel on peut détecter le niveau de remplissage de condensat dans ladite chambre collectrice de condensat (22), une unité de commande (27) électronique par le biais de laquelle le niveau de remplissage de condensat détecté au moyen dudit dispositif de mesure de niveau de remplissage (26) peut être évalué et la vanne (24) peut être manoeuvrée, ainsi qu'au moins une batterie (33) qui fournit l'alimentation en courant pour au moins ladite unité de commande (27), ledit dispositif de mesure de niveau de remplissage (26) et ladite vanne (24),
**caractérisé par le fait que**
ladite batterie (33) est une batterie rechargeable et qu'au moins un générateur de courant (34) est prévu par l'intermédiaire duquel de l'énergie électrique peut être générée à partir d'un courant de fluide et qui est en communication fluidique, en aval de la vanne (24) de fermeture de ladite conduite d'écoulement de condensat (25), avec ladite vanne (24) et fournit l'énergie électrique produite à la batterie (33) afin de charger celle-ci.

2. Purgeur de condensat selon la revendication 1,
**caractérisé par le fait que**
ladite batterie (33) est une batterie rechargeable et qu'une sortie de gaz comprimé (36) est prévue sur le purgeur de condensat pour évacuer du gaz comprimé dudit système à gaz comprimé et au moins un générateur de courant (34) est prévu par l'intermédiaire duquel de l'énergie électrique peut être générée à partir d'un courant de fluide et qui est en communication fluidique, en aval d'une deuxième vanne (37) manoeuvrable électriquement par le biais de laquelle ladite sortie de gaz comprimé (36) peut être obturée, avec ladite deuxième vanne (37) et fournit l'énergie électrique produite à la batterie (33) afin de charger celle-ci

3. Purgeur de condensat selon la revendication 2,
**caractérisé par le fait que**
ladite sortie de gaz comprimé (36) est disposée sur la chambre collectrice de condensat (22) au-dessus d'un niveau maximal de remplissage de condensat.

4. Purgeur de condensat selon l'une quelconque des revendications précédentes,
**caractérisé par le fait que**
ledit générateur de courant (34) est un générateur de courant avec un cristal piézoélectrique qui travaille selon le principe piézoélectrique et qui peut être activé par des sollicitations dues à la variation de pression qui sont provoquées par le courant de fluide, ou est un générateur de courant travaillant selon le principe de dynamo et ayant une roue de turbine qui peut être entraînée par le courant de fluide.

5. Purgeur de condensat selon l'une quelconque des revendications précédentes,
**caractérisé par**
un radiomodule par le biais duquel des alarmes et/ou l'état de fonctionnement du purgeur de condensat peuvent être transmis à un poste de contrôle de fonctionnement et/ou à un téléphone d'un collaborateur de maintenance.
